Europäisches Patentamt

European Patent Office

Office européen des brevets

(19)

(11) Veröffentlichungsnummer: **0 040 700**
**B1**

(12) # EUROPÄISCHE PATENTSCHRIFT

(45) Veröffentlichungstag der Patentschrift:
17.04.85

(51) Int. Cl.⁴: **G 01 M 11/02, G 01 B 9/02**

(21) Anmeldenummer: **81103162.4**

(22) Anmeldetag: **28.04.81**

(54) **Verfahren und Einrichtung zur Prüfung optischer Abbildungssysteme.**

(30) Priorität: **24.05.80 DE 3020022**

(43) Veröffentlichungstag der Anmeldung:
**02.12.81 Patentblatt 81/48**

(45) Bekanntmachung des Hinweises auf die Patenterteilung:
**17.04.85 Patentblatt 85/16**

(84) Benannte Vertragsstaaten:
**DE FR GB**

(56) Entgegenhaltungen:
**DE - A - 2 150 110**
**DE - A - 2 410 947**
**DE - A - 2 456 585**
**DE - B - 2 110 045**
**US - A - 2 642 374**

**APPLIED OPTICS, Band 18, Nr. 8, 1979, New York F.T. ARECCHI et al. "MTF measurement via diffraction shearing with optically superimposed gratings" Seiten 1247 bis 1248**
**APPLIED OPTICS, Band 19, Nr. 1, 1980 New York A.S. DE VANY "Interpreting wave-front and glass-error slopes in an interferogram" Seite 173**

(73) Patentinhaber: **IBM DEUTSCHLAND GMBH, Pascalstrasse 100, D-7000 Stuttgart 80 (DE)**

(84) Benannte Vertragsstaaten: **DE**

(73) Patentinhaber: **International Business Machines Corporation, Old Orchard Road, Armonk, N.Y. 10504 (US)**

(84) Benannte Vertragsstaaten: **FR GB**

(72) Erfinder: **Häusler, Gerd, Dr., Alterlanger Strasse 33, D-8520 Erlangen (DE)**
Erfinder: **Järisch, Walter, Dr., Finkenweg 15, D-7030 Böblingen (DE)**
Erfinder: **Makosch, Günter, Stuttgarter Strasse 40, D-7032 Sindelfingen 6 (DE)**

(74) Vertreter: **Teufel, Fritz, Dipl.-Phys. et al, IBM Deutschland GmbH. Europäische Patentdienste Postfach 265, D-8000 München 22 (DE)**

## Beschreibung

Die Erfindung betrifft ein Verfahren zur Prüfung optischer Abbildungssysteme nach dem Oberbegriff von Anspruch 1 und Einrichtungen zur Durchführung des Verfahrens.

Auf vielen Gebieten der Forschung und der Technik werden optische Abbildungssysteme eingesetzt, an die immer höhere Genauigkeitsanforderungen gestellt werden. Ein besonders wichtiges Beispiel stellen die photolithographischen Verfahren bei der Herstellung integrierter Halbleiterschaltungen dar. Das Bestreben, die Herstellungskosten derartiger Schaltungen zu senken und die Schaltgeschwindigkeit zu erhöhen, führt einerseits dazu, die Schaltkreise immer kleiner und damit deren Dichte auf dem Halbleiterplättchen immer größer zu machen und andererseits zu immer größeren Halbleiterscheiben, auf denen eine Vielzahl solcher Halbleiterplättchen (Chips) in einem Bearbeitungsgang behandelt werden können. Gegenwärtig liegen die kleinsten Schaltungsstrukturen, die mit photolithographischen Verfahren im sichtbaren Bereich des Spektrums noch erzeugt werden können, bei ungefähr 2 µm; die Halbleiterscheiben und damit das Gesichtsfeld der verwendeten optischen Abbildungssysteme haben einen Durchmesser von 10 bis 15 cm erreicht. Den hohen Anforderungen an die Genauigkeit der optischen Abbildungssysteme entsprechen noch schärfere Anforderungen an die Genauigkeit der zur Prüfung dieser Abbildungssysteme verwendeten Verfahren. Wenn Schaltkreisstrukturen mit einer minimalen Ausdehnung von 1 Mikrometer hergestellt werden sollen, ist es erforderlich, die Abbildungseigenschaften der photolithographischen Systeme auf 0,1 Mikrometer genau zu bestimmen. Die Prüfungen beziehen sich dabei auf folgende Parameter:

1.   Die lokale Verzeichnung des Abbildungssystems an jedem Punkt des Gesichtsfelds. Ist die individuelle lokale Verzeichnung jedes Abbildungssystems bekannt, so können Systeme mit gleicher oder ähnlicher lokaler Verzeichnungscharakteristik ausgesucht und in einer Herstell-Linie zusammen verwendet werden, in der mehrere Belichtungsschritte mit verschiedenen Systemen durchgeführt werden müssen. Auf diese Weise läßt sich die Gesamtausbeute bezogen auf die ganze Halbleiterscheibe beträchtlich erhöhen.
2.   Maßstabsfehler, d. h. Abweichungen vom theoretischen Abbildungsmaßstab des Abbildungssystems (bei photolithographischen Verfahren oft 1 : 1).
3.   Weitere Fehler wie

   Rotation, d. h. globale Drehungen
   Translation, d. h. globale Verschiebungen
   Orthogonalität, d. h. Winkelverzerrungen

Alle diese Fehler, die insgesamt die Verzeichnung darstellen, sollten für jeden Punkt des gesamten Gesichtsfelds einzeln bekannt sein. Im Stand der Technik sind jedoch keine Verfahren bekannt, mit denen diese Messung mit erträglichem Aufwand und der erforderlichen Genauigkeit durchzuführen wäre.

Das Prüfverfahren, das heute am häufigsten angewendet wird, besteht darin, ein bestimmtes Prüfmuster, z. B. Nonienraster, durch das zu prüfende System abbilden zu lassen und das Abbild punktweise auszumessen, z. B. auf mikroskopischem Wege, um Verzeichnungsfehler festzustellen. Dieses Verfahren ist jedoch sehr zeitraubend, so daß nur einige wenige Punkte (z. B. 9) des Gesichtsfelds ausgemessen werden können. Außerdem hängt die erzielbare Genauigkeit in starkem Maß von der Übung und der Sorgfalt der Bedienungsperson ab (es handelt sich um Einzelpunkte, eine automatische Mittelung über größere Ortsbereiche findet nicht statt).

Neben der Ausmessung von Einzelpunkten könnten auch Verfahren Anwendung finden, mit denen größere Bereiche des Gesichtsfeldes parallel auf Verzeichnungsfehler geprüft werden.

Dafür können Testmuster eingesetzt werden, die vom zu prüfenden System abgebildet und anschließend auf Abweichungen geprüft werden. Bei periodisch strukturierten Testmustern kann die Prüfung der Kopie auf interferometrischem Weg erfolgen; auch Moiré-Verfahren sind möglich (vgl. die gleichzeitig eingereichte europäische Patentanmeldung Nr. 81 103 173.1, gemäß EP-A-0 040 704).

Diese parallelen Prüfungen liefern in der Praxis aber nur Auflösungen $\geq 0,5$ µm. Diese Begrenzung ist eine Folge der nicht vermeidbaren Toleranzen bei der Herstellung des Originalgitters und der zum Aufbau des Prüfsystems verwendeten optischen Bauelemente.

Diese in der Praxis unvermeidbaren Fehlerquellen sollen am Beispiel der im Prinzip außerordentlich genauen interferometrischen Ausmessung von periodischen Mustern besprochen werden, wie sie beispielsweise in DE-A-2 150 110 beschrieben ist. Zur genauen Ausmessung eines Musters wird dieses mit zwei Laserbündeln bestrahlt, die symmetrische Einfallswinkel aufweisen. Aus dem entstehenden Interferenzmuster kann die Form des Musters genau bestimmt werden und somit im Prinzip die Abweichungen vom Originalmuster.

Die Absolutmessung der Verzerrungen der Gitterkopie kann jedoch aus folgenden Gründen nur eine beschränkte Genauigkeit ($\geq 0,5$ µm) liefern:

1.   Technisch herstellbare Originalgitter haben selbst schon Fehler, die sich bei der Gitterkopie wiederholen; die Absolutmessung der Gitterkopie täuscht somit im Abbildungssystem nicht vorhandene Fehler vor.

2. Die zur interferometrischen Ausmessung der Gitterkopie notwendigen optischen Elemente, z. B. Strahlaufweitungs-(Kollimator)-systeme sind nicht fehlerfrei und führen zu Verzerrungen der Wellenflächen im Interferometer. Diese Verzerrungen sind um so größer, je größer die optischen Bauelemente werden. Bei Gesichtsfeldern von 10 cm und mehr, wie sie für die heute üblichen Halbleiterscheiben erforderlich sind, führen diese Wellenflächenverzerrungen zu beträchtlichen Fehlern der interferometrischen Messung.

Um neben der lokalen Verzeichnung auch Fehler des Abbildungsmaßstabes messen zu können, muß der absolute Wert des Einfallswinkels beider symmetrisch einfallender Laserbündel sehr genau eingestellt werden. Bei Halbleiterscheiben mit 10 cm Durchmesser und bei einer geforderten Meßgenauigkeit von 0,1 μm müßte der Winkel auf 0,1 Bogensekunde genau einstellbar sein. Der Grund hierfür besteht darin, daß zur Bestimmung von Abbildungsmaßstabsfehlern die Anzahl der Interferenzstreifen im Gesichtsfeld eines Beobachters herangezogen wird. Diese Anzahl von Streifen hängt äußerst empfindlich vom Winkel zwischen den beiden Lichtbündeln ab, die das Gitter beleuchten und außerdem von der Gitterkonstanten des beleuchteten Gitters. Eine derartig genaue reproduzierbare Einstellbarkeit von absoluten Winkeln ist in der Praxis nicht möglich.

Die vorliegende Erfindung stellt sich daher die Aufgabe, ein Verfahren und Einrichtungen zur Messung der lokalen Verzeichnung und des Abbildungsmaßstabs optischer Abbildungssysteme mit großem Gesichtsfeld anzugeben, deren Genauigkeit mindestens 0,1 Mikrometer beträgt und mit denen das gesamte Gesichtsfeld gleichzeitig ausgemessen werden kann.

Diese Aufgabe wird durch die in den Ansprüchen 1 bzw. 7 bzw. 8 angegebene Erfindung gelöst; besondere Ausgestaltungen der Erfindung sind in den abhängigen Ansprüchen gekennzeichnet.

Das vorgeschlagene Meßverfahren besteht darin, in einem ersten Schritt das Interferogramm eines Originalgitters aufzunehmen, in einem zweiten Schritt unter identisch gleichen Bedingungen eine im zu prüfenden Abbildungssystem hergestellte Gitterkopie interferometrisch aufzunehmen und in einem dritten Schritt die beiden erzeugten Interferogramme miteinander zu vergleichen, vorzugsweise auf elektronischem Weg.

Bei diesem in zwei nacheinanderfolgenden Schritten durchgeführten Referenzverfahren werden alle in der Praxis nicht zu vermeidenden optischen und mechanischen Fehler von Bauelementen kompensiert, extrem genaue und absolute Justiereinstellungen vermieden und Umwelteinflüsse weitgehend ausgeschlossen. Die zur Durchführung des Verfahrens notwendige Einrichtung ist einfach aufgebaut, da nur die relative Lage von Originalgitter bzw. Gitterkopie bezüglich des interferometrischen Aufbaus konstant gehalten werden muß; ein simultaner Vergleich von Original und Kopie würde einen hohen optischen Aufwand bedeuten, der wiederum zu nichtkontrollierbaren Fehlereinflüssen führt.

Die erreichte Empfindlichkeit des Verfahrens ist besser als 0,1 μm (bis 0,05 Mikrometer), der Maßstabsfehler eines Abbildungssystems kann mit einer Genauigkeit von mehr als 0,1 μm bestimmt werden.

Das Verfahren ist auch anwendbar zur Prüfung von Abbildungssystemen, die nur ein spiegelverkehrtes Bild erzeugen.

Ausführungsbeispiele der Erfindung werden nun anhand von Zeichnungen näher erläutert. Es zeigt

Fig. 1A den prinzipiellen Aufbau einer interferometrischen Meßanordnung zur Untersuchung von Originalgitter bzw. Gitterkopie.

Fig. 1B eine vereinfachte interferometrische Meßanordnung zur Untersuchung von Originalgitter bzw. Gitterkopie.

Fig. 2A die Superposition der Interferogramme von Originalgitter und Gitterkopie (in einer Koordinatenrichtung).

Fig. 2B das ermittelte Verzeichnungsfeld eines optischen Systems mit Angabe der lokalen Verzeichnung (in beiden Koordinatenrichtungen).

Fig. 3 eine schematische Darstellung der Halterung für Originalgitter bzw. Gitterkopie.

Fig. 4 Gitterstruktur mit orthogonalen Teilgittern.

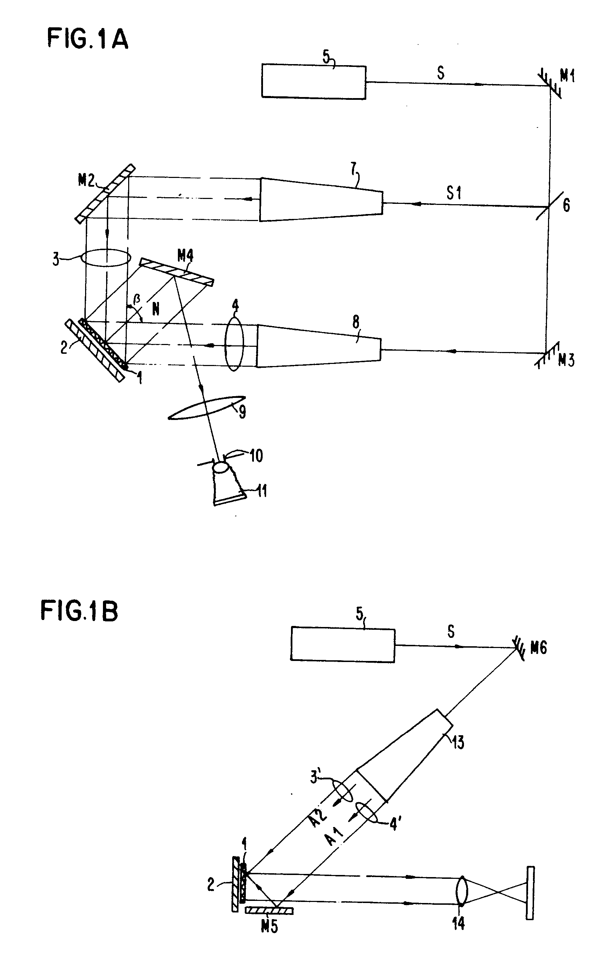

Fig. 1 zeigt den prinzipiellen Aufbau einer interferometrischen Meßanordnung, mit der zwei Gitterstrukturen miteinander verglichen werden können. Das zu untersuchende Gitter 1 befindet sich auf einer justierbaren Halterung 2 und wird mit zwei Lichtbündeln 3, 4 beaufschlagt, die symmetrisch zur Normalen der Gitterfläche unter einem Winkel $\beta$ einfallen. Die Parallelbündel 3 und 4 werden aus dem Lichtbündel S eines Lasers 5 mit Hilfe eines Strahlteilers 6, zweier Strahlaufweitungsoptiken 7, 8 und Umlenkspiegeln M 1, M 2, M 3 erzeugt. Das am Gitter 1 gebeugte Licht einer bestimmten ausgesuchten Beugungsordnung wird über einen Umlenkspiegel M 4 und eine Linse 9 auf eine Beobachtungsblende 10 gegeben, an der das entstehende Interferenzmuster photographisch oder mit einer elektronischen Aufzeichnungseinrichtung 11 gespeichert werden kann. Alle zum Aufbau dieses optischen Systems verwendeten Bauelemente, insbesondere die Strahlaufweitungsoptiken 7 und 8 und der Spiegel M 2 sind vorzugsweise von höchster Präzision; die Verzerrung der Wellenflächen durch die Strahlungsaufweitungsoptiken 7 oder 8 und den Spiegel M 2 sollte beispielsweise nicht mehr als $\lambda/20$ betragen.

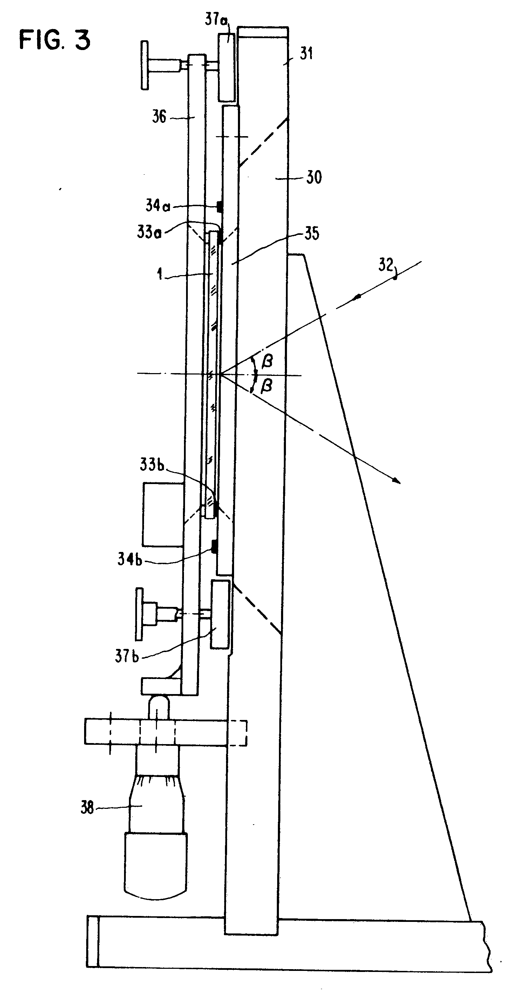

Zur Durchführung des oben beschriebenen Verfahrens wird in Halterung 2 zuerst das Originalgitter gelegt und dessen Interferogramm mit dem optischen Registriergerät 11 gespeichert. Im zweiten Schritt des Verfahrens wird anstelle des Originalgitters die in dem zu prüfenden Abbildungssystem erzeugte Gitterkopie in Halterung 2 eingelegt. Dabei muß sichergestellt werden, daß die Normale N der Gitterkopie bis auf 1 Bogenminute genau denselben Winkel relativ zur Symmetrieachse der beleuchtenden Wellen einschließt, wie im ersten Schritt die Normale des Originalgitters. Diese Forderung ist mit mechanischen Mitteln ohne Schwierigkeiten zu erfüllen (vergleiche Erläuterung von Fig. 3).

Um Originalgitter und Gitterkopie in die gleiche Raumlage bringen zu können, sind auf beiden Gittern zwei Meßmarken angebracht; beide Gitter werden so in die Halterung 2 eingelegt, daß ein ausgewählter Interferenzstreifen durch die beiden Meßmarken läuft.

Nach der so erfolgten Orientierung der Gitterkopie wird das entsprechende Interferogramm im Aufzeichnungsgerät 11 registriert.

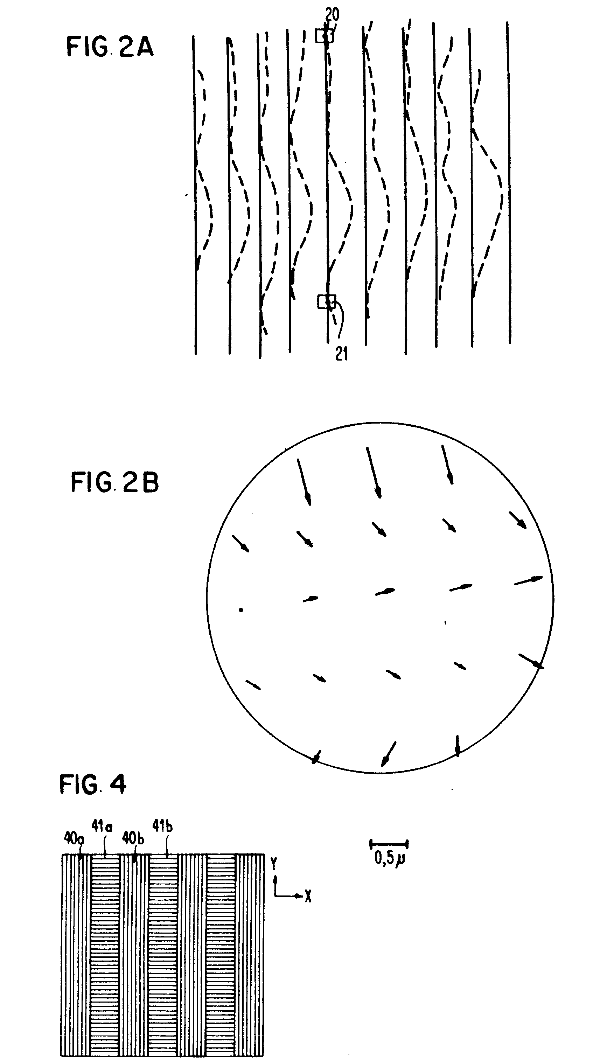

Fig. 2A zeigt ein Beispiel zweier überlagerter Interferogramme von Originalgitter und Gitterkopie. Die durchgezogenen Linien entsprechen den Interferenzlinien des Originalgitters, die gestrichelt dargestellten Linien den Interferenzlinien der Gitterkopie. Die beiden oben erwähnten Meßmarken, durch die Interferenzlinien gelegt werden, tragen die Bezugszeichen 20 und 21.

Aus dem gegenseitigen Abstand zweier zusammengehöriger Interferenzlinien von Original und Kopie lassen sich die jeweilige lokale Verzeichnung und der Abbildungsmaßstabfehler bestimmen. Wird ein Gitter mit einer Gitterkonstante $g_0$ von 4 μm verwendet und in der vierten Beugungsordnung beobachtet, so genügt es, die Lager der Interferenzstreifen auf $1/5$ Streifenbreite zu bestimmen, um die geforderte Genauigkeit von 0,1 μm zu erreichen. Der Winkel $\beta$ erfüllt bei Beobachtung in vierter Beugungsordnung ungefähr die Bedingung

$$\sin \beta \approx \frac{4 \cdot \lambda}{g_0}$$

Die lokale Verteilung und die Größe der Verzeichnungen über das ganze Gesichtsfeld läßt sich nach Auswertung der Interferogramme als Vektorfeld nach Fig. 2B darstellen; dieser Vorgang kann vollautomatisch erfolgen, wenn die Interferogramme als Digitalwerte in den Speicher eines Rechners gegeben werden und das Vektorfeld auf einem Bildschirm erscheinen soll.

Um eine genaue Ortsbestimmung auf der Gitterkopie zu ermöglichen, kann auf dieser zusätzlich ein gut sichtbares Muster von Referenzlinien aufbelichtet werden.

Durch Drehung des Originalgitters um 90° bei der Herstellung der Gitterkopie im abbildenden System können nacheinander Verzeichnungs- und Maßstabfehler in X- und Y-Richtung bestimmt werden.

Die Messung der Orthogonalität ist jedoch nach einer Modifikation des beschriebenen Verfahrens auch in einem Schritt möglich: Hierzu wird nicht ein eindimensionales Gitter verwendet, sondern ein Gitterfeld, das aus verschiedenen orthogonalen Teilgittern besteht. Fig. 4 zeigt ein mögliches Beispiel mit Streifengittern; die Teilgitter 40a, b, ... haben vertikale Orientierung, die Teilgitter 41a, b, ... horizontale. Zur simultanen Erzeugung von Interferogrammen beider Richtungen X, Y (Fig. 4) muß das Gitter, bzw. dessen Kopie, mit zwei Paaren symmetrisch einfallender Wellen beleuchtet werden. Die Einfallsebenen müssen senkrecht zueinander in X- und Y-Richtung orientiert sein.

Translation und Rotation der Gitter beeinflussen diese Messung nicht; eine kleine relative Verschiebung von Original und Kopie zwischen den beiden Messungen hat somit keinen störenden Einfluß auf das vorgeschlagene Meßverfahren.

Will man jedoch neben Verzeichnungs-, Orthogonalitäts- und Maßstabfehlern auch Translationen und Rotationen messen, so müssen vor der Belichtung durch die Kopiermaschine auf beiden Vorlagen mikroskopisch auswertbare Meßmarken angebracht werden.

Fig. 3 zeigt ein Beispiel für die mechanische Konstruktion einer Halterung für Originalgitter bzw. Gitterkopie mit einer für die Justierung ausreichenden Reproduzierbarkeit. Fig. 3 stellt eine Seitenansicht der rotationssymmetrischen Aufnahmevorrichtung dar. Das Gitter 1 wird von rechts durch eine kreisförmige Aussparung 30 in einer Trägerplatte 31 mit einem Lichtbündel 32 beleuchtet. Die genaue Lage des Gitters wird durch eine Dreipunktauflage 33a, 33b eines Anschlagrings 35 bestimmt, die genaue Lage der etwas größeren Gitterkopie durch eine Dreipunktauflage 34a, 34b. Die letztgenannte Dreipunktauflage 34 ist dabei um Bruchteile eines Millimeters höher als die Dreipunktauflage 33. Beide Dreipunktauflagen sind bei derselben Einspannung des Anschlagrings 35 geschliffen und spannen somit zwei zueinander parallele Ebenen auf, so daß sich Original und Kopie mit einer Parallelität von besser als einer Bogenminute justieren lassen.

Zur Halterung des Originalgitters bzw. der Gitterkopie dient eine Aufnahme 36, die magnetisch gegen die Dreipunktauflage gezogen wird (Magnete 37a, 37b). Zwischen den Magneten 37a, b und der Trägerplatte 31 bleiben daher kleine Luftspalte. Die bewegliche Aufhängung der Aufnahme 36 erlaubt es, die Gitter bezüglich Rotation und Translation mit Differential-Mikrometerschrauben 38 zu justieren. Die Halterung ist so konstruiert, daß Original und Kopie innerhalb weniger Sekunden ausgetauscht werden können, so daß die beiden interferometrischen Messungen ohne zeitliche Stabilitätsprobleme unter identischen Bedingungen durchgeführt werden können.

Bei vielen gebräuchlichen photolithographischen Abbildungssystemen entspricht die Kopie einem Spiegelbild des Originals. Die zur Erzielung der hohen Genauigkeit erforderliche Konstanthaltung der geometrischen Verhältnisse wird mit folgenden zusätzlichen Maßnahmen möglich:

Hat das Gitter beliebige Fehler und sind die Fehler der Wellenflächen der beleuchtenden Bündel 3, 4 rotationssymmetrisch, so hat eine Spiegelung des Gitters keine zusätzlichen Fehler des Meßaufbaus zur Folge. Zur Auswertung kann also ein Interferenzmuster des Originalgitters mit einem gespiegelten Interferenzmuster der zu prüfenden Kopie verglichen werden (z. B. kann die Spiegelung auf elektronischem Weg erfolgen).

Haben Gitter und die Wellenflächen beliebige Fehler, so muß das Gitter schon für den Meßvorgang gespiegelt werden. Gitter, die auf einem durchsichtigen Substrat angeordnet sind, werden dazu um eine Achse senkrecht zur optischen Achse gedreht und von der Rückseite her beleuchtet. Die beleuchtenden Wellen gehen dann durch das Substratglas hindurch und es werden im allgemeinen Fall durch Unebenheiten und durch nichtparallele Glasflächen Fehler entstehen. Da aber beim vorgeschlagenen speziellen Meßverfahren ein völlig symmetrischer Aufbau vorliegt und jeweils beide zur Interferenz kommenden Belichtungswellenanteile etwa durch die gleichen Stellen des Substrats gehen, werden diese Fehler weitgehend kompensiert.

Die zur Durchführung des Prüfverfahrens erforderlichen Originalgitter werden zweckmäßigerweise als Chrom-Muster auf einem Glassubstrat erzeugt. Dazu können die bekannten Hilfsmittel der Photolithographie (automatische Belichtungsmaschinen, Art Work Generator) zur Herstellung eines Einzelgitters dienen, das anschließend in einer Schrittschaltkamera auf ein Substrat multipliziert wird, dessen Größe dem späteren Gesichtsfeld entspricht. Die hier erzielbare Genauigkeit beträgt 0,15 Mikrometer oder besser.

Die Gitterkopie wird ebenfalls zweckmäßig als Chrom-Muster auf einem Glas- oder Siliciumsubstrat hergestellt. Das in der Halbleitertechnologie übliche Verfahren, Muster in $SiO_2$ auf Si zu definieren, ist hier nicht anwendbar, da sich aufgrund von Dickenschwankungen der Oxidschicht Phasenstörungen bei der interferometrischen Messung ergeben.

Aus thermischen und mechanischen Gründen kann es vorteilhaft sein, für das Originalgitter und/oder die Gitterkopie Quarzsubstrate zu verwenden. Um Interferenzen an Vorder- und Rückfläche dieser Substrate zu vermeiden, werden diese schwach keilförmig ausgestaltet. Ist es wegen der Spiegelung im abbildenden System erforderlich, das Originalgitter von der Rückseite zu beleuchten, so bewirkt der Keil nur dann keine Fehler, wenn die Gitterstriche senkrecht zur Keilkante verlaufen.

Für eine schnelle visuelle Prüfung der optischen Abbildungseigenschaften eines Systems wäre es wünschenswert, die Interferenzlinien des Originalgitters als gerade Linien zu erzeugen, so daß sich die Verzeichnungsfehler des Systems direkt aus den Abweichungen ersehen lassen, die die Interferenzlinien der Kopie von denen des Originals aufweisen. Gerade Interferenzlinien des Originals lassen sich aber aufgrund der unvermeidlichen optischen Fehler der Bauteile im interferometrischen Prüfsystem selbst dann nicht erhalten, wenn das Originalgitter ein ideales Gitter wäre.

Die Abbildungsfehler des interferometrischen Prüfsystems können jedoch kompensiert werden, wenn das Originalgitter mit den gleichen Wellenflächen hergestellt wird, die später zur interferometrischen Vermessung der Kopie verwendet werden. Dazu wird in einem ähnlichen Aufbau wie in Fig. 1A eine photoempfindliche Schicht auf einem Substrat ersetzt. Die interferierenden Lichtbündel 3 und 4 erzeugen dann ein periodisches Linienmuster, das nach entsprechender photolithographischer Bearbeitung als Originalgitter für das hier vorgeschlagene Prüfverfahren angewendet wird. Dieses Originalgitter erzeugt dann in Registriergerät 11 Interferenzlinie, die Gerade darstellen.

Eine vereinfachte Anordnung zur interferometrischen Messung von Originalgitter bzw. Gitterkopie mit kleinen Abmessungen ist in Fig. 1B dargestellt. Das Strahlenbündel des Lasers 5 wird nur einer Strahlaufweitungsoptik 13 zugeführt und die eine Hälfte 3' des aufgeweiteten Parallelbündels direkt auf das Gitter 1 in Halterung 2 gegeben, die andere Hälfte 4' nach Reflektion an einem Spiegel M 5, dessen Ebene senkrecht zum Gitter 1 steht. Eine in Richtung der Flächennormale des Gitters 1 angeordnete Linse 14 erfaßt dann den positiven und den negativen Beugungsteil einer hohen Beugungsanordnung, um in einer vorgegebenen Aufzeichnungsvorrichtung die Interferenzbilder des Originalgitters bzw. der Gitterkopie zu erzeugen. Der Einfallswinkel der Teilbündel 3' und 4' auf Gitter 1 muß wiederum auf rund 1 Bogenminute reproduzierbar sein.

## Patentansprüche

1. Verfahren zur Prüfung optischer Abbildungssysteme, bei dem ein eine periodische Struktur aufweisendes Originalmuster mit einer vom zu prüfenden Abbildungssystem hergestellten Kopie dieses Originalmusters verglichen wird, dadurch gekennzeichnet,
daß in einem ersten Schritt ein Interferogramm des Originalmusters von zwei Lichtbündeln (3, 4) erzeugt wird, die unter gleichen, bezüglich einer Flächennormalen der periodischen Struktur symmetrischen Einfallswinkeln auf das Originalmuster auftreffen,
daß in einem zweiten Schritt unter identisch gleichen Bedingungen ein Interferogramm der Kopie des Originalmusters erzeugt wird, und
daß in einem dritten Schritt die relativen Abweichungen beider Interferogramme bestimmt werden.

2. Verfahren nach Anspruch 1, dadurch gekennzeichnet, daß als Originalmuster ein lineares optisches Gitter verwendet wird.

3. Verfahren nach Anspruch 1, dadurch gekennzeichnet, daß als Originalmuster ein Gitterfeld verwendet wird, dessen Teilgitter (40, 41) senkrecht zueinander orientiert sind.

4. Verfahren nach einem der Ansprüche 1 bis 3, dadurch gekennzeichnet, daß als Gitter eine Chromstruktur auf einem Glas- oder Quarzsubstrat verwendet wird, die eine Gitterkonstante im Bereich einiger Mikrometer aufweist.

5. Verfahren nach einem der Ansprüche 1 bis 4, dadurch gekennzeichnet, daß die Interferogramme elektronisch gespeichert und elektronisch miteinander verglichen werden.

6. Verfahren nach einem der Ansprüche 1 bis 5, dadurch gekennzeichnet, daß zur Prüfung optischer Abbildungssysteme, die eine spiegelverkehrte Kopie des Originalmusters herstellen, die Kopie mit dem gespiegelten Originalmuster verglichen wird.

7. Verfahren nach einem der Ansprüche 1 bis 5, dadurch gekennzeichnet, daß zur Prüfung optischer Abbildungssysteme, die eine spiegelverkehrte Kopie des Originalmusters herstellen, das Originalmuster vor der Herstellung der Kopie senkrecht zur optischen Achse gedreht wird.

8. Einrichtung zur Durchführung des Verfahrens nach einem der Ansprüche 1 bis 7 gekennzeichnet durch:

— eine Halterung (2) zur wahlweisen Aufnahme eines eine periodische Struktur aufweisenden Originalmusters bzw. einer im zu prüfenden Abbildungssystem hergestellten Kopie dieses Originalmusters,
— eine optische Anordnung zur Erzeugung zweier getrennter kohärenter Parallellichtbündel (3, 4), die eine Lichtquelle (5), einen Strahlteiler (6) sowie getrennte Strahlaufweitungsoptiken (7, 8) in den Teilstrahlengängen umfaßt,
— optische Elemente (M 2) zur Ablenkung der beiden Parallellichtbündel (3, 4) derart, daß sie unter gleichen, bezüglich einer Flächennormalen der periodischen Struktur symmetrischen Einfallswinkeln auf das Originalmuster bzw. die Kopie auftreffen,
— eine Registriereinrichtung (M 4, 9, 10, 11) für die Interferogramme, die nach Beugung der beiden Parallellichtbündel am Originalmuster bzw. an der Kopie erhalten werden, sowie
— Mittel zum Vergleich der Interferogramme des Originalmusters und der Kopie.

9. Einrichtung zur Durchführung des Verfahrens nach einem der Ansprüche 1 bis 7, gekennzeichnet durch:

— eine Halterung (2) zur wahlweisen Aufnahme eines eine periodische Struktur aufweisenden Originalmusters bzw. einer im zu prüfenden Abbildungssystem hergestellten Kopie dieses Originalmusters,
— eine optische Anordnung (5, M 6, 13) zur Erzeugung eines kohärenten Parallellichtbündels, dessen eine Hälfte (3') direkt auf das Originalmuster bzw. die Kopie gerichtet ist,

— einen im Wege der anderen Hälfte (4') des Parallellichtbündels angeordneten Spiegel (M 5), der derart ausgerichtet ist, daß das Licht beider Lichtbündelhälften (3', 4') unter den gleichen, bezüglich einer Flächennormalen der periodischen Struktur symmetrischen Einfallswinkeln auf das Originalmuster bzw. auf die Kopie auftrifft,
— eine Registriereinrichtung (14, 15) für die Interferogramme, die nach Beugung der beiden Lichtbündelhälften (3', 4') am Originalmuster bzw. an der Kopie erhalten werden, sowie
— Mittel zum Vergleich der Interferogramme des Originalmusters und der Kopie.

10. Einrichtung nach Anspruch 8 oder 9, dadurch gekennzeichnet, daß die Registriereinrichtung (M 4, 9, 10, 11) in einer Position angeordnet ist, in der eine bestimmte ausgewählte Beugungsordnung beobachtet wird.

11. Einrichtung nach einem der Ansprüche 6 bis 8, dadurch gekennzeichnet, daß die Halterung (2) für das Originalmuster bzw. die Kopie jeweils Dreipunktauflagen (33 bzw. 34) aufweist, die auf Kreisen verschiedener Durchmesser angeordnet sind und zwei unter sich parallele Ebenen im Abstand von einigen Zehntel mm aufspannen.

## Claims

1. Method for testing optical imaging systems, where an original pattern with a periodical structure is compared with a sample pattern copy made by the imaging system to be tested, characterized in
that in a first step an interferogram of the original pattern is generated by two light beams (3, 4) which impinge on the original pattern under the same angles of incidence which are symmetrical with respect to the surface normal of a periodic structure,
that in a second step under identical conditions an interferogram of the copy of the original pattern is generated,
and that in a third step the relative deviations of both interferograms are determined.

2. Method as claimed in claim 1, characterized in that as an original pattern a linear optical grating is used.

3. Method as claimed in claim 1, characterized in that as an original pattern a grating field is used whose partial gratings (40, 41) are oriented perpendicularly to each other.

4. Method as claimed in any one of claims 1 to 3, characterized in that as a grating a chromium structure on a glass or quartz substrate is used showing a grating constant in the range of some micrometers.

5. Method as claimed in any one of claims 1 to 4, characterized in that the interferograms are electronically stored and electronically compared with each other.

6. Method as claimed in any one of claims 1 to 5, characterized in that for testing optical imaging systems producing a mirror-image copy of the original, the copy is compared with the mirrored original.

7. Method as claimed in any one of claims 1 to 5, characterized in that for testing optical imaging systems producing a mirror-image copy of the original, the original is rotated perpendicularly to the optical axis before the copy is made.

8. Device for carrying out the method as disclosed in any one of claims 1 to 7, characterized by

— a holding device (2) for selectively receiving an original with a periodic structure, or of a copy of said original made in an imaging system to be tested,
— an optical arrangement for generating two separate coherent parallel light beams (3, 4) comprising a light source (5), a beam splitter (6), and separate beam expansion optics (7, 8) in the partial beam paths,
— optical elements (M 2) for deflecting the two parallel light beams (3, 4) in such a manner that they impinge on the original of a copy, respectively, under the same angles of incidence which are symmetrical with respect to a surface normal of the periodic structure
— a registration device (M 4, 9, 10, 11) for the interferograms obtained after the diffraction of the two parallel light beams at the original or at the copy, respectively, and
— means for comparing the interferograms of the original and the copy.

9. Device for carrying out the method as claimed in any one of claims 1 to 7, characterized by

— a holding device (2) for selectively receiving an original with a periodic structure, or a copy of this original made in an imaging system to be tested
— an optical arrangement (5, M 6, 13) for generating a coherent parallel light beam whose one half (3') is directed onto the original or the copy, respectively, direct
— a mirror (M 5) arranged in the path of the other half (4') of the parallel light beam, said mirror being aligned in such a manner that the light of both light beam halves (3', 4') impinges onto the original or the copy, respectively, at the same angles of incidence that are symmetrical with respect to a surface normal of the periodic structure
— a registration device (14, 15) for the interferograms obtained after the diffraction of the two light beam halves (3', 4') at the original or at the copy, respectively, and
— means for comparing the interferograms of the original and of the copy.

10. Device as claimed in any one of claims 8 or 9, characterized in that the registration device (M 4, 9, 10, 11) is arranged in a position in which a predetermined selected diffraction order is observed.

11. Device as claimed in any one of claims 6 to 8, characterized in that the holding device (2) for the original or the copy, respectively, comprises three-point supports (33 or 34, respectively) arranged on circles of different diameters and defining two parallel planes at a distance of some tenths of a millimeter.

## Revendications

1. Procédé pour contrôler des systèmes optiques de formation d'images, selon lequel un modèle original possédant une structure périodique est comparé à une copie de ce modèle original établie par le système de formation d'imges devant être contrôle, caractérisé en ce qu'au cours d'une première phase opératoire, on réalise un interférogramme du modèle original à l'aide de deux faisceaux de lumière (3, 4) qui tombent sur le modèle original sous des angles d'incidence identiques symétriques par rapport à une normale à la surface de la structure périodique, qu'au cours d'une seconde phase opératoire, on réalise un interférogramme de la copie du modèle original dans des conditions identiques, et qu'au cours d'une troisième phase opératoire, on détermine les écarts relatifs des deux interférogrammes.

2. Procédé selon la revendication 1, caractérisé en ce que l'on utilise comme modèle original un réseau optique linéaire.

3. Procédé selon la revendication 1, caractérisé en ce que l'on utilise comme modèle original un ensemble de réseaux, dont les réseaux partiels (40, 41) sont orientés perpendiculairement les uns aux autres.

4. Procédé selon l'une des revendications 1 à 3, caractérisé en ce que l'on utilise comme rèseau une structure en chrome disposé sur un substrat en verre ou en quartz et que possède une constante de réseau de l'ordre de quelques microns.

5. Procédé selon l'une des revendications 1 à 4, caractérisé en ce que les interférogrammes sont mémorisés électroniquement et sont comparés entre eux électroniquement.

6. Procédé selon l'une des revendications 1 à 5, caractérisé en ce que pour contrôler des systèmes optiques de formation d'images, qui réalisent une copie, à symétrie par réflexion, du modèle original, on compare la copie à l'inverse du modèle original, obtenu par réflexion.

7. Procédé selon l'une des revendications 1 à 5, caractérisé en ce que pour contrôler des systèmes optiques de formation d'images, qui réalisent une copie, à symétrie à réflexion, du modèle original, on fait pivoter le modèle original perpendiculairement à l'axe optique, avant la réalisation de la copie.

8. Dispositif pour la mise en œuvre du procédé selon l'une des revendications 1 à 7, caractérisé par:

— un support (2) servant à enregistrer au choix un modèle original possédant une structure périodique ou une copie de ce modèle original, réalisée dans le système de formation d'images devant être contrôlé,

— un dispositif optique servant à produire deux faisceaux de lumière parallèle cohérent et séparés (3, 4), qui contient une source de lumière (5), un diviseur de rayonnement (6), ainsi que deux dispositifs optiques séparés d'élargissement de faisceau (7, 8) situés sur les trajets des rayonnements partiels,

— des éléments optiques (M 2) servant à dévier les deux faisceaux de lumière parallèle (3, 4) de telle sorte qu'ils tombent sous des angles d'incidence identiques, symétriques par rapport à une normale à la surface de la structure périodique, sur le modèle original ou sur la copie,

— un dispositif d'enregistrement (M 4, 9, 10, 11) pour les interférogrammes qui sont obtenus, après diffraction des deux faisceaux de lumière parallèle, sur le modèle original ou sur la copie, et

— des moyens servant à comparer les interférogrammes du modèle original et de la copie.

9. Dispositif pour la mise en œuvre du procédé selon l'une des revendications 1 à 7, caractérisé par:

— un support (2) servant à enregistrer au choix un modèle original possédant une structure périodique ou une copie de ce modèle original, réalisée dans le système de formation d'images devant être contrôlé,

— un dispositif optique (5, M 6, 13) servant à produire un faisceau de lumière parallèle cohérent dont une moitié (3') est dirigée directement sur le modèle original ou sur la copie,

— un miroir (M 5) qui est disposé sur le trajet de l'autre moitié (4') du faisceau de lumière parallèle et qui est orienté de telle sorte que la lumière des deux moitiés (3', 4') du faisceau de lumière tombe sous les mêmes angles d'incidence symétriques par rapport à une normale à la surface de la structure périodique, sur le modèle original ou sur la copie,

— un dispositif d'enregistrement (14, 15) pour les interférogrammes qui sont obtenus après diffraction des deux moitiés (3', 4') du faisceau de lumière sur le modèle original ou sur la copie, et

— des moyens pour comparer les interférogrammes du modèle original et de la copie.

10. Dispositif suivant la revendication 8 ou 9, caractérisé en ce que le dispositif d'enregistrement (M 4, 9, 10, 11) est situé dans une position dans laquelle on observe un ordre déterminé choisi de diffraction.

11. Disposition selon l'une des revendications 6 à 8, caractérisé en ce que le support (2) pour le modèle original ou la copie comporte des appuis en trois points (33 ou 34), qui sont disposés sur des cercles possédant des diamètres différents et s'étendent entre deux plans parallèles à une distance de quelques dixièmes de mm.

**FIG.1A**

**FIG.1B**

FIG. 2A

20

21

FIG. 2B

FIG. 4

40a  41a  40b  41b

0,5 µ

Y
X

11

FIG. 3